# EUROPÄISCHE PATENTSCHRIFT

(11) **EP 2 574 900 B1**
(45) Veröffentlichungstag und Bekanntmachung des Hinweises auf die Patenterteilung: **08.07.2015**
(21) Anmeldenummer: 11183598.9
(22) Anmeldetag: 30.09.2011
(51) Int. Cl.: G01N 5/00

(54) **Messgerät zur gravimetrischen Feuchtigkeitsbestimmung**
Measuring device for gravimetric moisture determination
Appareil de mesure destiné à la détermination de l'humidité gravimétrique

(43) Veröffentlichungstag der Anmeldung: 03.04.2013
(73) Patentinhaber: Mettler-Toledo AG, 8606 Greifensee (CH)
(72) Erfinder: Albrecht, Beat, 8046 Zürich (CH); Fornito, Stefano, 8618 Oetwil am See (CH); Meister, Beat, 8606 Nänikon (CH)

(56) Entgegenhaltungen:
- EP-A1- 0 611 956
- DE-A1- 4 134 818
- US-A- 2 102 972
- US-B1- 6 255 603

## Beschreibung

Die vorliegende Erfindung bezieht sich auf ein Messgerät zur gravimetrischen Feuchtigkeitsbestimmung.

Zur Bestimmung des Feuchtigkeitsgehaltes einer Probe wird diese getrocknet und das Gewicht vor und nach dem Trocknungsvorgang manuell bestimmt. Durch die umfangreichen Arbeitsabläufe, die mit dieser Methode verbunden sind, ist diese sehr teuer und anfällig für Fehler.

Gegebenenfalls kann der Gewichtsverlust auch während des Trocknungsvorganges gemessen werden. Dabei nimmt bei einer bekannten Probe in Abhängigkeit der Temperatur, der Trocknungszeit und den Prüfraumbedingungen deren Gewichtswert ab, welcher einer Gewicht- Zeit- Kurve folgt, die sich asymptotisch dem Trockengewicht der Probe annähert. Die Kurve wird für die jeweilige Probe durch Vergleichsversuche ermittelt und kann in einer Näherungsformel mathematisch ausgedrückt werden. Aufgrund der zur Verfügung stehenden elektronischen Mittel kann ein entsprechend ausgerüstetes Messgerät zur gravimetrischen Feuchtigkeitsbestimmung den Feuchtigkeitsgehalt einer Probe anhand der gemessen Kurvenparameter und der Trocknungszeit errechnen und auf einer Anzeigeeinheit anzeigen. Durch diese Methode muss das zu trocknende Gut nicht mehr vollständig durchgetrocknet sein, es genügt die Ermittlung der Koordinaten zweier Erfassungspunkte im Gewicht-Zeitdiagramm.

Wie bereits eingangs erwähnt, verändert sich das Gewicht einer Probe im Wesentlichen in Abhängigkeit von der Temperatur, der Trocknungszeit und den Prüfraumbedingungen. Vor allem die hohen Anforderungen an den Prüfraum beschränken die auf dem Markt erhältlichen Geräte in ihrer Genauigkeit.

Als Prüfraum wird ein durch das Gehäuse des Messgerätes umschlossener, zwecks Einführung beziehungsweise Entfernung einer Probe öffenbarer Raum bezeichnet. Im Inneren des Prüfraums sind zudem eine Probeaufnahme und ein Mittel zur Erwärmung der Probe angeordnet. Die Probeaufnahme ist mit einem gravimetrischen Messgerät verbunden.

Üblicherweise wird eine dünne Schicht der Probe auf eine ebene Probeaufnahme, beispielsweise eine Probeschale aufgebracht. Die Schale wird im Messgerät zur gravimetrischen Feuchtigkeitsbestimmung in ihrer flächigen Ausdehnung vorzugsweise horizontal und parallel zur flächigen Ausdehnung des Mittels zur Erwärmung der Probe angeordnet, um eine gleichmässige Erwärmung der Probe zu ermöglichen.

Als Mittel zur Erwärmung der Probe werden verschiedene Strahlungsquellen wie Heizstrahler, Mikrowellengeneratoren, Halogen- und Quarzlampen verwendet. Durch Versuche konnte festgestellt werden, dass eine der Hauptursachen einer ungenauen Messwerterfassung bei bestehenden Messgeräten zur gravimetrischen Feuchtigkeitsbestimmung die Art der verwendeten Strahlungsquellen und deren Anordnung im Prüfraum ist.

Ein Messgerät zur gravimetrischen Feuchtigkeitsbestimmung der genannten Gattung ist aus der europäischen Patentschrift EP 0 611 956 B1 bekannt. Bei diesem Gerät erfolgt die Beschickung der Waagschale ausserhalb des Messgerätes zur gravimetrischen Feuchtigkeitsbestimmung. Dazu wird die Waage auf einem schubladenförmigen Auszug aus dem Messgerätgehäuse herausgefahren. Als Strahlungsquelle wird eine ringförmige Halogenlampe eingesetzt, welche im Betriebszustand oberhalb der Probeaufnahme angeordnet ist. Aus EP 1850 110 A1 sind weitere Ausführungsformen bekannt. Es wird beispielsweise ein Messgerät offenbart das zur Beschickung geöffnet wird, indem ein Teil des Gehäuses in horizontaler Richtung verschwenkt wird. In einer weiteren Ausführungsform wird ein Teil des Gehäuses in vertikaler Richtung verschwenkt. Auch die in US 7851 712 B2 offenbarten Messgeräte werden durch Verschwenkung in vertikaler Richtung eines Gehäuseteils zur Beschickung geöffnet.

Zum Schutz des Mittels zur Erwärmung der Probe kann zwischen der Probe und dem Mittel zur Erwärmung der Probe ein Schutzglas angeordnet sein. Dieses Schutzglas ist verschmutzungsanfällig. Bei den bekannten Messgeräten ist das Schutzglas nur schwer zugänglich und wird deshalb nur selten gereinigt, was zu Verfälschungen des Messresultates führen kann.

Aufgabe ist es daher, ein Messgerät zur gravimetrischen Feuchtigkeitsbestimmung zur Verfügung zu stellen, welches auf einfache Weise gereinigt werden kann.

Diese Aufgabe wird durch das erfindungsgemässe Messgerät zur gravimetrischen Feuchtigkeitsbestimmung gemäss Anspruch 1 und dessen abhängigen Ansprüchen gelöst.

Das erfindungsgemässe Messgerät zur gravimetrischen Feuchtigkeitsbestimmung weist ein Gehäuse und eine im Gehäuse angeordnete Wägevorrichtung auf. Dabei weist die Wägevorrichtung eine Lastaufnahme, auf die eine Probe auflegbar ist, auf. Das Gehäuse weist einen feststehenden Gehäuseteil und einen beweglicher Gehäuseteil auf. Der bewegliche Gehäuseteil kann eine Messposition und eine Wartungsposition einnehmen, wobei der feststehende Gehäuseteil und der beweglichen Gehäuseteil in Messposition einen im Wesentlichen abgeschlossenen Prüfraum um die Lastaufnahme bildet und im Prüfraum ein Mittel zur Erwärmung einer auf der Lastaufnahme auflegbaren Probe angeordnet ist. In der Wartungsposition sind der feststehende Gehäuseteil und der bewegliche Gehäuseteil derart voneinander beabstandet, dass das Mittel zur Erwärmung für Wartungszwecke zugänglich ist. In Messposition ist zwischen dem Mittel zur Erwärmung der Probe und der Probe ein Schutzglas angeordnet. Erfindungsgemäss ist das Schutzglas am beweglichen Gehäuseteil angeordnet und in Wartungsposition werkzeuglos entfernbar. Auf diese Weise kann das Schutzglas einfach entfernt und gereinigt werden. Der Benutzer bzw. der Servicetechniker benötigen weniger Zeit für diesen Vorgang und werden ihn deshalb öfter durchführen.

In diesem Zusammenhang wird unter Gehäuseteil das Gehäuse mit den darin beziehungsweise daran angeordneten Geräteelementen verstanden. Typischerweise ist am beweglichen Gehäuseteil das Mittel zur Erwärmung der Probe und im feststehenden Gehäuseteil die Wägevorrichtung, die Probenaufnahme und das Elektronikmodul angeordnet.

Das erfindungsgemässe Messgerät kann eine Beschickungsposition einnehmen, wobei in Beschickungsposition der feststehende Gehäuseteil und der bewegliche Gehäuseteil derart voneinander beabstandet sind, dass eine Probe auf die Lastaufnahme aufbringbar ist. Mittels eines Verschiebungsmittels ist der bewegliche Gehäuseteil von der Messposition in die Beschickungsposition verschiebbar. Sowohl in Messposition, Beschickungsposition als auch Wartungsposition ist der bewegliche Gehäuseteil oberhalb des feststehenden Gehäuseteils angeordnet.

Vorteilhafterweise ist das Mittel zur Erwärmung und somit auch das Schutzglas in der Wartungsposition im Wesentlichen vertikal ausgerichtet. Dadurch ist das Mittel zur Erwärmung dem Benutzer zugewandt und leichter zugänglich.

Bei der Erfindung ist das Schutzglas mittels einer werkzeuglos lösbaren Verbindung mit dem beweglichen Gehäuseteil verbunden. Zu Wartungszwecken kann das Schutzglas einfach aus dem beweglichen Gehäuseteil gezogen werden.

In einer möglichen Ausführungsform ist das Schutzglas mittels ebenfalls werkzeuglos entfernbarer Bauteilen am beweglichen Gehäuseteil fixiert. Diese Bauteile können beispielsweise das Schutzglas in einer vordefinierten Position festklemmen. Es ist auch möglich, dass das Schutzglas und die Bauteile durch eine Feder-Nut Verbindung miteinander verbunden sind. Die Feder-Nut Verbindung kann manuell ohne zu Hilfenahme von Werkzeugen gelöst werden.

Auch der Einsatz von Halterungen ist möglich. Die Halterungen können auch der Positionierung des Schutzglases dienen. In einer möglichen Ausführungsform ist das Schutzglas zwischen einer oberen Halterung und einer unteren Halterung positionierbar und zumindest eine der Halterungen ist werkzeuglos entfernbar. Die obere Halterung ist dabei an der dem Mittel zur Erwärmung der Probe zugewandten Seite angeordnet. Die untere Halterung ist an der Probenaufnahme zugewandten Seite angeordnet. Das Schutzglas ist zwischen der oberen und unteren Halterung positioniert. Entweder die obere oder die untere Halterung ist werkzeuglos entfernbar. Um das Schutzglas zu entfernen muss die werkzeuglos entfernbare Halterung entfernt werden. Anschliessend kann das Schutzglas entfernt werden ohne dass Werkzeug benötigt wird.

Sowohl das Schutzglas als auch die obere und untere Halterung können mittels am beweglichen Gehäuseteil angeordneter Führungsschienen in das bewegliche Gehäuseteil eingeführt werden und dort positioniert bzw. gehalten werden. Die Führungsschienen sind in Messposition und/oder Beschickungsposition im Wesentlichen horizontal ausgerichtet. In Wartungsposition sind die Führungsschienen im Wesentlichen vertikal ausgerichtet.

Die werkzeuglos entfernbare Halterung und/oder das Schutzglas ist mittels mindestens einer Führungsschiene in einer kontrollierten Richtung aus dem beweglichen Gehäuseteil entfernbar. Die Führungsschiene erleichtert dem Benutzer das Entfernen bzw. das Positionieren des Schutzglases und/oder der werkzeuglos enfernbaren Halterung.

In Wartungsposition ist die Führungsschiene vertikal ausgerichtet. Dadurch wird es dem Benutzer ermöglicht das Schutzglas und/oder die werkzeuglos entfernbare Halterung nach oben aus dem beweglichen Gehäuseteil zu entfernen. Ausserdem kann der Benutzer direkt auf die Halterung, das Schutzglas und das Mittel zur Erwärmung der Probe schauen. Diese Anordnung vereinfacht es dem Benutzer das Schutzglas zu entfernen.

Das Entfernen des Schutzglases und der Halterung wird zusätzlich durch eine Wartungsöffnung im beweglichen Gehäuseteil erleichtert. Durch die Wartungsöffnung kann das Schutzglas und/oder eine Halterung entfernt werden. Die Wartungsöffnung ist idealerweise in der Verlängerung der Führungsschiene angeordnet. Durch diese Anordnung wird es ermöglicht das Schutzglas und/oder die Halterung mittels der Führungsschiene geführt durch die Wartungsöffnung aus dem beweglichen Gehäuseteil zu entfernen.

Die Wartungsöffnung ist in Wartungsposition geöffnet. In Messposition und Beschickungsposition ist sie hingegen geschlossen. In Messposition und Beschickungsposition ist die Wartungsöffnung durch einen Teil des beweglichen Gehäuseteils verschlossen. Dadurch besteht beim Messen und Beschicken die Öffnung nicht. Es können beim Messen und Beschicken keine Verunreinigungen durch die Wartungsöffnung in das Messgerät eindringen.

In einer bevorzugten Ausführungsform ist um das Mittel zur Erwärmung der Probe und das Schutzglas zumindest ein Teil eines Innenwindschutzes angeordnet. Ein Teil des Innenwindschutzes dient als obere Halterung zur Positionierung des Schutzglases. Es ist somit keine zusätzliche Halterung für das Schutzglas notwendig. Der Innenwindschutz ist am beweglichen Gehäuseteil angeordnet.

Ausserdem weist das Messgerät eine Blende auf mittels der auf die Richtung der Wärmestrahlung auf die Probe Einfluss genommen werden kann. Diese Blende kann gleichzeitig als untere Halterung des Schutzglases dienen. Diese Blende ist am beweglichen Gehäuseteil angeordnet und ist werkzeuglos entfernbar.

Das Mittel zur Erwärmung der Probe kann beispielsweise eine Heizplatte, eine Heizfolie, eine Breitband- Lichtquelle, eine monochromatische Lichtquelle, einen Heizstrahler, eine Heizschlange, ein Peltier-Element oder einen Mikrowellengenerator aufweisen.

In einer vorteilhaften Ausführungsform weist das Messgerät ein elektrisches Kontaktmittel mit einem ersten Teil und einem zweiten Teil auf. Der erste Teil des elektrischen Kontaktmittels ist mit dem feststehenden Gehäuseteil und der zweite Teil des elektrischen Kontaktmittels mit dem beweglichen Gehäuseteil verbunden. Dabei besteht in Messposition über den ersten und zweiten Teil des elektrischen Kontaktmittels eine elektrische Verbindung und in Beschickungsposition ist die elektrische Verbindung zwischen dem ersten und dem zweiten Teil des elektrischen Kontaktmittels unterbrochen.

Idealerweise ist nur der feststehende Gehäuseteil am Stromnetz angeschlossen und der bewegliche Gehäuseteil ist ausschliesslich über das elektrische Kontaktmittel am Stromnetz angeschlossen. Durch diese Anordnung wird sichergestellt, dass nur in Messposition am beweglichen Gehäuseteil Spannung anliegt. In Beschickungsposition und Wartungsposition liegt keine Spannung am beweglichen Gehäuseteil an. Dadurch wird das Mittel zur Erwärmung der Probe während der Beschickung und Wartung nicht mit Strom versorgt und die Verbrennungsgefahr für den Benutzer ist reduziert.

Idealerweise ist die Wägevorrichtung im feststehenden Gehäuseteil angeordnet. In einer bevorzugten Ausführungsform ist die Wägevorrichtung in einem Wägeraum angeordnet und der Wägeraum und der Prüfraum sind durch mindestens eine vertikale Trennwand voneinander getrennt, wobei diese Trennwand mindestens eine Durchführung aufweist, durch die ein Verbindungsglied hindurchreicht, mit welchem die Wägevorrichtung mit der im Prüfraum angeordneten Probeaufnahme verbindbar ist.

Einzelheiten des erfindungsgemässen Messgeräts ergeben sich anhand der Beschreibung des in den Zeichnungen dargestellten Ausführungsbeispiels. Es zeigen:
- Fig. 1: einen Schnitt durch eine schematische Darstellung eines erfindungsgemässes Messgeräts in Messposition;
- Fig. 2: einen Schnitt durch eine schematische Darstellung des Messgeräts aus Figur 1 in Beschickungsposition;
- Fig. 3a: eine schematische Darstellung eines weiteren erfindungsgemässen Messgeräts mit einem Temperatursensor, der sich in Messposition befindet;
- Fig. 3b: eine schematische Darstellung des in Fig. 3a dargestellten Messgeräts wobei sich der Temperatursensor in Beschickungsposition befindet;
- Fig. 4: eine isometrische Darstellung des erfindungsgemässen Messgeräts in Messposition;
- Fig. 5: das Messgerät aus Figur 4 in Beschickungsposition;
- Fig. 6: das Messgerät aus Figur 4 in Wartungsposition;
- Fig. 7: das Messgerät aus Figur 6 in Wartungsposition mit teilweise entferntem Schutzglas und Windschutz und
- Fig. 8: der bewegliche Gehäuseteil des Messgeräts aus Figur 7 in Wartungsposition ohne Schutzglas.

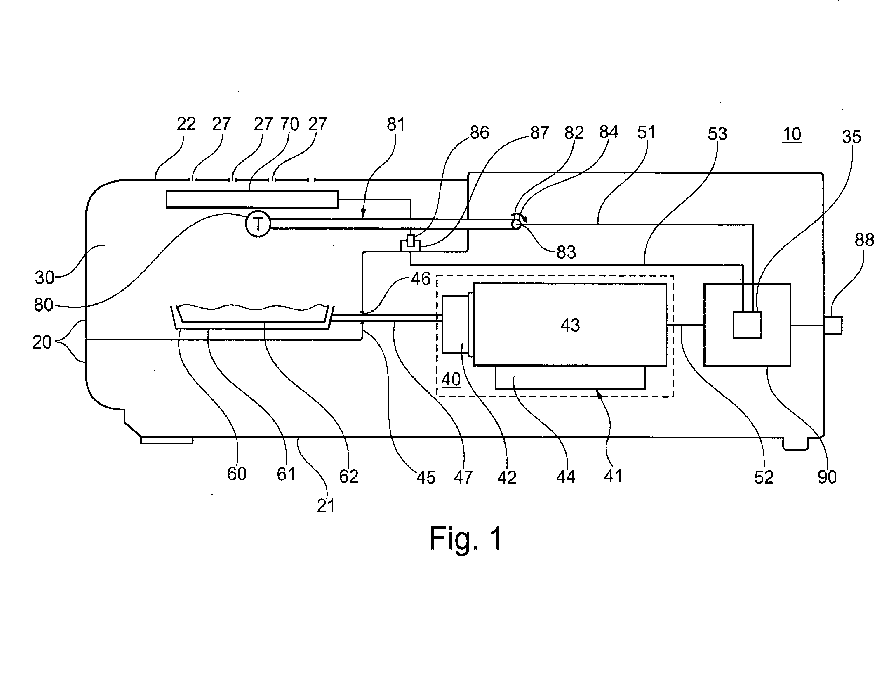

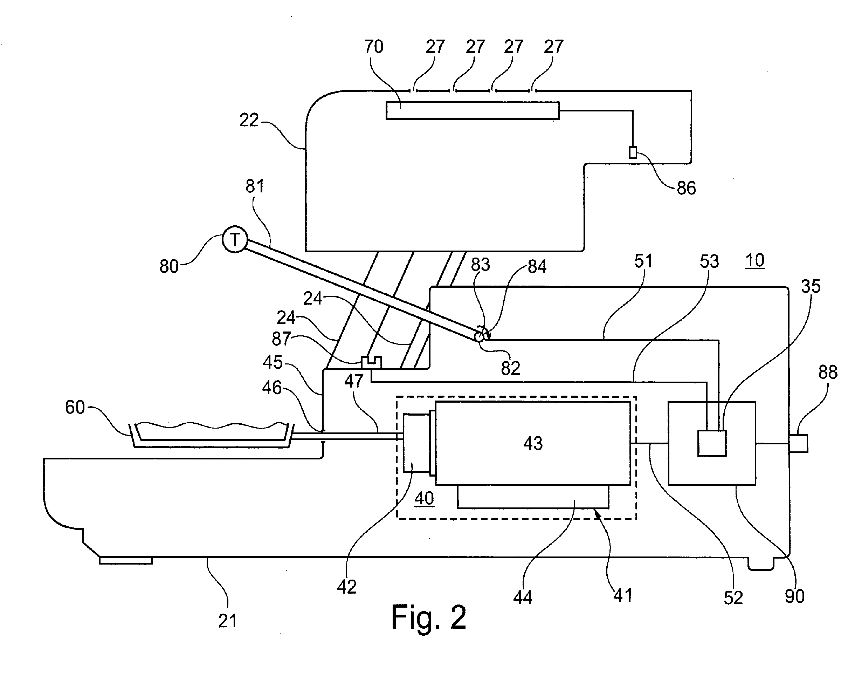

In Figur 1 und Figur 2 ist eine schematische Darstellung eines erfindungsgemässen Messgeräts 10 im Schnitt dargestellt. In Figur 1 befindet sich das Messgerät 10 in Messposition und in Figur 2 in Beschickungsposition. Das Messgerät 10 weist ein Gehäuse 20 auf, in welchem ein Prüfraum 30 angeordnet ist. Das Gehäuse 20 ist in einen beweglichen Gehäuseteil 22 und in einen feststehenden Gehäuseteil 21 unterteilt. Bei Benutzung steht der feststehende Gehäuseteil 21 auf einer festen Unterlage. Der bewegliche Gehäuseteil 22 ist am feststehenden Gehäuseteil befestigt. Hinten, das heisst an der vom Benutzer abgewandten Seite des Prüfraumes 30 ist eine Wägevorrichtung 40 im feststehenden Gehäuseteil 21 angeordnet. Der bewegliche Gehäuseteil 22 ist mittels einer Translationsführung 24 am feststehenden Gehäuseteil 21 geführt. Die Translationsführung 24 ist derart ausgestaltet, dass bei der Bewegung des beweglichen Gehäuseteils 22 von der Messposition in die Beschickungsposition die Ausrichtung des beweglichen Gehäuseteils 22 im Wesentlichen konstant bleibt. D.h. der bewegliche Gehäuseteil 22 wird im Wesentlichen parallel zum feststehenden Gehäuseteil 21 verschoben. Im als Hohlkörper ausgestalteten feststehenden Gehäuseteil 21 sind eine Wägezelle 43 und mindestens ein Elektronikmodul 90 angeordnet, welche durch Übertragungsmittel 52 miteinander verbunden sind. Das Elektronikmodul 90 enthält mindestens ein nicht näher dargestelltes Signalverarbeitungsmodul, gegebenenfalls auch ein Steuerungsund/oder Regelungsmödul. Die Wägezelle 43 weist mindestens einen feststehenden Bereich 41 und einen Lastaufnahmebereich 42 auf. Bekannte Wägezellentypen sind beispielsweise mit Dehnungsmessstreifen bestückte elastische Verformungskörper, Wägezellen die nach dem Prinzip der elektromagnetischen Kraftkompensation arbeiten, Wägezellen mit Schwingsaiten, kapazitive Wägesensoren und dergleichen. Der feststehende Bereich 41 ist mit dem feststehenden Gehäuseteil 21 fest verbunden und am Lastaufnahmebereich 42 ist ein Verbindungsglied 47 angeordnet, welches eine Probeaufnahme 60 mit dem Lastaufnahmebereich 42 der Wägezelle 43 verbindet. Auf die Probeaufnahme 60 kann wie dargestellt eine Probeschale 61 mit einer Probe 62 aufgelegt werden. Sofern es die Ausgestaltung der Probeaufnahme 60 erlaubt, kann selbstverständlich die Probe 62 auch direkt auf die Probeaufnahme 60 aufgebracht werden.

Wie in Figur 1 dargestellt, befindet sich das Messgerät 10 in Messstellung; das heisst, dass sich die Probeaufnahme 60 mit der aufgelegten Probeschale 61 im Prüfraum 30 befindet. Der feststehende Gehäuseteil 21 und der bewegliche Gehäuseteil 22 bilden einen im Wesentlichen abgeschlossenen Prüfraum 30 um die Probenaufnahme 60. Eine Mittel zur Erwärmung 70 ist im Wesentlichen parallel zur flächigen Ausdehnung der Probeaufnahme 60 angeordnet, um eine möglichst homogene Wärmeverteilung zumindest an der Oberfläche der Probe 62 zu erreichen. Es ist auch möglich unterhalb der Probeaufnahme 60 im Prüfraum 30 ein zusätzliches Mittel zur Erwärmung anzuordnen, wobei deren Strahlung von unten auf die Probe 62 einwirkt. Eine in ihrer flächigen Ausdehnung parallele Anordnung des Mittels zur Erwärmung 70 der Probeaufnahme 60 ist aber nicht zwingend erforderlich. Je nach Probe 62 und durchzuführender Messung kann auch ein schräg zur Probeaufnahme 60 angeordnetes Mittel zur Erwärmung 70 von Vorteil sein.

Damit die von der Probe 62 abgegebene Feuchtigkeit aus dem Prüfraum 30 entweichen kann, sind im Gehäuse 20 an geeigneter Stelle, vorzugsweise oberhalb des Mittels zur Erwärmung 70 im beweglichen Gehäuseteil 22, Abzugsöffnungen 27 angeordnet. Um eine ausreichende Luftzirkulation innerhalb des Prüfraumes 30 zu erzeugen, sind ferner an geeigneter Stelle Belüftungsöffnungen vorzusehen.

In Figur 1 befindet sich das Messgerät 10 in Messposition. Der feststehende Gehäuseteil 21 und der bewegliche Gehäuseteil 22 bilden einen im Wesentlichen abgeschlossenen Prüfraum 30. Dabei wird der Prüfraum 30 nach oben im Wesentlichen vom beweglichen Gehäuseteil 22 und nach unten im Wesentlichen vom feststehenden Gehäuseteil 21 begrenzt. Das Mittel zur Erwärmung 70 ist im beweglichen Gehäuseteil 22 angeordnet. Idealerweise ist das Mittel zur Erwärmung 70 über Steckverbindungen lösbar mechanisch mit dem beweglichen Gehäuseteil 22 verbunden. Dadurch kann das Mittel zur Erwärmung 70 zur Reinigung oder Reparatur ohne grossen Aufwand ausgebaut werden. Ferner können durch die Verwendung von Steckverbindungen der Anwender das Messgerät 10 verschiedene, in ihrer Funktionsweise unterschiedliche Mittel zur Erwärmung verwenden. Dadurch ist der Anwender in der Lage, auf die Probe 62 abgestimmte Prüfraumbedingungen zu schaffen.

Das Messgerät 10 weist ein Elektronikmodul 90 auf, das im feststehenden Gehäuseteil 21 angeordnet ist. Das Elektronikmodul 90 weist verschiedene Steuer-/Regelvorrichtungen auf. Unter anderem weist sie auch eine Steuer-/Regelvorrichtung 35 zur Steuerung und Regelung des Mittels zur Erwärmung 70 auf. Ein schematisch dargestellter Temperatursensor 80 erfasst die Temperatur der Probe 62 und liefert die zur Regelung des Mittels zur Erwärmung 70 notwendigen Informationen an die Steuer-/Regelvorrichtung 35. Die Steuer-/Regelvorrichtung 35 ist zudem mit der Wägevorrichtung 40 beziehungsweise mit dem Elektronikmodul 90 mittels mindestens eines Übertragungsmittels 52 verbunden. Das Übertragungsmittel 52 dient der Übermittlung von elektrischen und/oder elektronischen Signalen. Dadurch kann mittels des Elektronikmoduls 90 die Steuer-/Regelvorrichtungen 35 angesteuert werden. Das Messgerät 10 wird mittels eines Stromanschlusses 88 mit Strom versorgt. Der Stromanschluss 88 ist am feststehenden Gehäuseteil 21 angeordnet. Die Stromzufuhr erfolgt bevorzugterweise ausschliesslich über das feststehende Gehäuseteil 21. Der Benutzer bzw. Servicetechniker ist somit nicht der Gefahr ausgesetzt während der Wartung einen Stromschlag zu bekommen.

Die Steuer-/Regelvorrichtung 35 und der Temperatursensor 80 sind mittels eines Übertragungsmittels 51 miteinander verbunden. Ausserdem sind die Steuer-/Regelvorrichtung 35 und das Mittel zur Erwärmung der Probe 70 mittels eines weiteren Übertragungsmittels 53 miteinander verbunden. Die Übertragungsmittel 51, 53 dienen der Übermittelung von elektrischen und elektronischen Signalen zwischen den jeweiligen Bauteilen. Während des Messvorgangs wird mittels des Temperatursensors 80 die Temperatur im Prüfraum 30 bestimmt. Das mittels des Temperatursensors 80 erzeugte Temperatursignal wird mittels des Übertragungsmittels 51 an die Steuer-/Regelvorrichtung 35 übermittelt. Das Temperatursignal ist ein Eingangssignal der Steuer-/Regelvorrichtung 35 mittels dessen das Mittel zur Erwärmung der Probe 70 gesteuert wird.

Der Temperatursensor 80 ist in Messposition zwischen der Probenaufnahme 60 und dem Mittel zur Erwärmung der Probe 70 angeordnet. Durch diese Anordnung kann der für die Messung relevante Temperaturwert gemessen werden. Es besteht auch die Möglichkeit den Temperatursensor an einer anderen Stelle zu positionieren. Die dadurch erhaltenen Werte können jedoch die Erwärmung im Prüfraum weniger genau erfassen. Der Temperatursensor 80 ist auf einer Lanze 81 angeordnet, die am feststehenden Gehäuseteil 21 befestigt ist. Die Lanze 81 ist im Wesentlichen starr und weist ein erstes und ein zweites Ende auf. Am ersten Ende ist der Temperatursensor 80 angeordnet, das zweite Ende ist mit dem feststehenden Gehäuseteil 21 verbunden. Dadurch dass das zweite Ende mit dem feststehenden Gehäuseteil 21 verbunden ist, ist für den Betrieb des Temperatursensors 80 keine elektrische und/oder elektronische Verbindung vom feststehenden Gehäuseteil 21 zum beweglichen Gehäuseteil 22 erforderlich.

Das Übertragungsmittel 51 ist an oder in der Lanze 81 angeordnet. Über ein Drehlager 82 kann die Lanze 81 verdreht werden. Das Drehlager 82 ist am zweiten Ende der Lanze 81 angeordnet. Das Drehlager 82 weist eine Drehachse 83 auf, wobei die Achse des Drehlagers 83 im Wesentlichen horizontal ausgerichtet ist.

Die Lanze 81 und das Drehlager 83 sind derart angeordnet dass der Temperatursensor 80 beim Wechsel von der Messposition in die Beschickungsposition auf einer kreisförmigen Bahn in einer vertikalen Ebene geführt wird. Es ist auch möglich die kreisförmige Bahn in einer anderen Ebene anzuordnen. So ist es beispielsweise möglich die Achse des Drehlagers im Wesentlichen vertikal auszurichten, wodurch der Temperatursensor 80 beim Wechsel von Messposition in Beschickungsposition in einer kreisförmigen Bahn in einer horizontalen Ebene geführt wird.

Die Lanze 81 ist in Messposition mittels der Federkraft eines Federelements 84 vorgespannt. Wird der bewegliche Gehäuseteil 22 von der Messposition in die Beschickungsposition gebracht, so wird die Lanze 81 mittels der Federkraft des vorgespannten Federelements 84 von der Probenaufnahme 60 wegbewegt. Der Temperatursensor 80 und die Lanze 81 behindern in Beschickungsposition nicht den Zugriff auf die Probenaufnahme 60 und die Beschickung des Messgeräts vereinfacht sich. Das Federelement 84 weist idealerweise eine drehmomentbelastete Feder auf, wobei die Achse des Drehmoment mit der Achse des Drehlagers 83 übereinstimmt. Es sind natürlich auch andere Federelemente, wie beispielsweise druckbelastete Federelemente einsetzbar. Dabei muss das Federelement derart angeordnet sein, dass es in Messposition gespannt ist und in Beschickungsposition entspannt bzw. weniger gespannt ist.

Da das Mittel zur Erwärmung der Probe 70 im beweglichen Gehäuseteil 22 und die Steuer- und Regelvorrichtung 35 im feststehenden Gehäuseteil 21 angeordnet ist, muss das Übertragungsmittel 53 elektrische und/oder elektronische Signale vom feststehenden Gehäuseteil 22 in den beweglichen Gehäuseteil 21 übertragen. Dies könnte beispielsweise durch ein flexibles Kabel erfolgen. Durch die Bewegung des beweglichen Gehäuseteils 21 wäre dieses Kabel Biegebelastungen ausgesetzt und wäre daher verschleissanfällig.

Durch ein elektrisches Kontaktmittel mit einem ersten Teil 86 und einem zweiten Teil 87, wobei der erste Teil 86 mit dem beweglichen Gehäuseteil 22 und der zweite Teil mit dem feststehenden Gehäuseteil 21 fest verbunden ist, kann dieses Problem umgangen werden. Dazu ist der erste und der zweite Teil des elektrischen Kontaktmittels 86, 87 derart angeordnet, dass in Messposition über den ersten und zweiten Teil 86, 87 eine elektrische Verbindung besteht und in Beschickungsposition die elektrische Verbindung unterbrochen ist. Ein wesentlicher Vorteil dieser Anordnung besteht darin, dass das Mittel zur Erwärmung der Probe 70 in Beschickungsposition nicht mit Elektrizität versorgt wird. Idealerweise ist die Elektronik zur Steuerung ausschliesslich im feststehenden Gehäuseteil 22 angeordnet. Die Steuerung des Mittels zur Erwärmung der Probe 70 erfolgt ausschliesslich über das erste und zweite elektrische Kontaktmittel 86, 87. Es ist somit kein Anschluss zum Transport von Steuersignalen in den beweglichen Gehäuseteil 21 notwendig. Dies ist ein weiterer Grund für die Anordnung des Temperatursensors 80 am feststehenden Gehäuseteil 21. Wäre der Temperatursensor 80 am beweglichen Gehäuseteil 22 angeordnet, wäre ein Transfer von Signalen vom feststehenden Gehäuseteil 21 in den beweglichen Gehäuseteil 22 notwendig. Ein weiterer Vorteil des erfindungsgemässen Messgeräts 10 besteht darin, dass auch in Beschickungsposition die Temperatur mittels des Temperatursensors 80 gemessen und erfasst werden kann. Auf diese Weise kann beispielsweise die Umgebungstemperatur während des Beschickens gemessen werden.

Das elektrische Kontaktmittel 86, 87 weist eine Steckverbindung auf. Dabei ist einer der beiden Teile des elektrischen Kontaktmittels 86, 87 als Stecker ausgebildet und der andere Teil als eine mit dem Stecker zusammenwirkende Buchse ausgebildet. Die Steckrichtung der Steckerverbindung verläuft im Wesentlichen in vertikaler Richtung.

In Figur 2 ist das Messgerät 10 aus Figur 1 in Beschickungsposition dargestellt. Mittels einer Translationsführung 24 kann der bewegliche Gehäuseteil 22 vom feststehenden Gehäuseteil 21 wegbewegt werden, wodurch das Messgerät 10 von der Messposition in die Beschickungsposition übergeführt wird. Bei der dabei ausgeführten Bewegung erfährt der bewegliche Gehäuseteil 22 eine im Wesentlichen rein translatorische Bewegung. In Beschickungsposition ist der bewegliche Gehäuseteil 22 oberhalb des feststehenden Gehäuseteils 21 und oberhalb der Wägevorrichtung 40 angeordnet. Das Mittel zur Erwärmung der Probe 70 ist in dieser Position zwischen dem beweglichen Gehäuseteil 22 und dem feststehenden Gehäuseteil 21 angeordnet. Dadurch wird ein unbeabsichtigtes Berühren des unter Umständen heissen Mittels zur Erwärmung der Probe 70 verhindert.

Der Temperatursensor 80 wird bei Einnahme der Beschickungsposition nach oben und seitlich von der Probenaufnahme 60 wegbewegt. Der Temperatursensor 80 behindert somit das Beschicken der Probenaufnahme 60 nicht.

Das elektrische Kontaktmittel 86, 87 ist in der Beschickungsposition unterbrochen. Es fliesst keine Elektrizität vom feststehenden Gehäuseteil 21 in der bewegliche Gehäuseteil 22. Da der bewegliche Gehäuseteil 22 über keinen Stromanschluss verfügt, liegt in Beschickungsposition kein Strom am beweglichen Gehäuseteil 22 an.

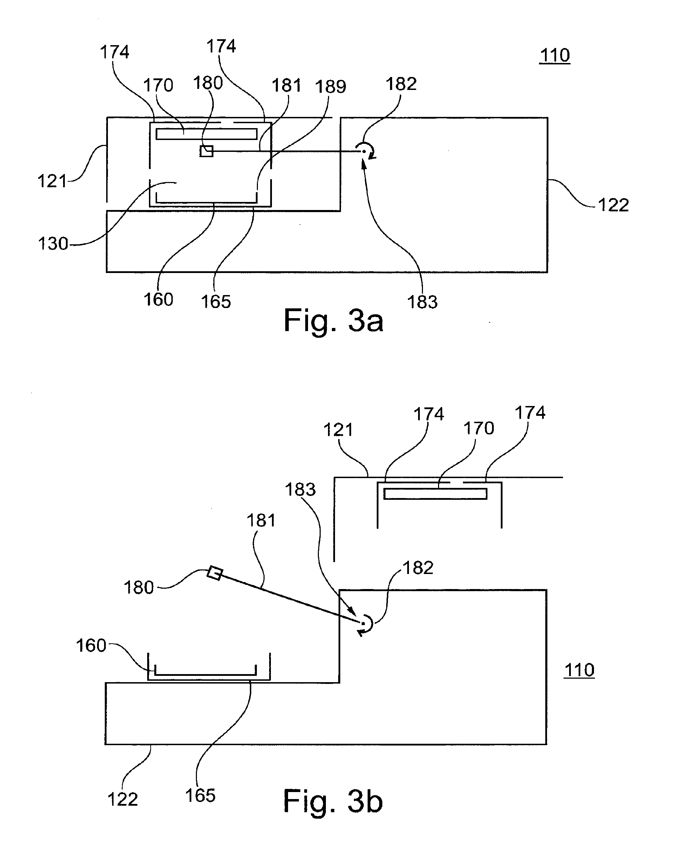

In den Figuren 3a und 3b ist ein weiteres erfindungsgemässes Messgerät 110 stark schematisiert dargestellt. Figur 3a zeigt die Messvorrichtung 110 in Messposition und Fig. 3b zeigt das in Fig. 3a dargestellte Messgerät 110 in Beschickungsposition.

Das Messgerät 110 weist ein Gehäuse 120 mit einem feststehenden Gehäuseteil 121 und einem beweglichen Gehäuseteil 122 auf.

In Messposition wird vom feststehenden Gehäuseteil 121 und vom beweglichen Gehäuseteil 122 ein im Wesentlichen abgeschlossener Prüfraum 130 gebildet. In diesem Prüfraum 130 ist die Probenaufnahme 160 angeordnet. Oberhalb der Probenaufnahme 160 ist ein Mittel zur Erwärmung der Probe 170 angeordnet. Das Mittel zur Erwärmung der Probe 170 ist fest mit dem beweglichen Gehäuseteil 122 verbunden. Ein Temperatursensor 180 ist auf einer Lanze 181 angeordnet. Die Lanze 181 weist ein erstes und ein zweites Ende auf, wobei am ersten Ende der Temperatursensor 180 befestigt ist und das zweite Ende beweglich mit dem feststehenden Gehäuseteil 121 verbunden ist. In Messposition ist der Temperatursensor 180 oberhalb der Lastaufnahme 160 und unterhalb des Mittels zur Erwärmung der Probe 170 angeordnet. In Beschickungsposition ist der Temperatursensor 180 im Wesentlichen seitlich der Laustaufnahme 160 angeordnet. Dies wird dadurch erreicht indem die Lanze 181 starr ist und mittels eines Drehlagers 182 am feststehenden Gehäuseteil 121 befestigt ist. Idealerweise ist die Achse 183 des Drehlagers 182 in horizontaler Richtung ausgerichtet. Die Lanze 181 kann in Messposition mittels der Federkraft eines Federelements vorgespannt sein. Wird das bewegliche Gehäuseteil 122 von der Messposition in Beschickungsposition gebracht, wird die Lanze 181 mittels der Federkraft des Federelements auf einer Kreisbahn nach oben und seitlich bewegt. Bevorzugterweise ist das Federelement in Messposition durch das bewegliche Gehäuseteil 122 vorgespannt.

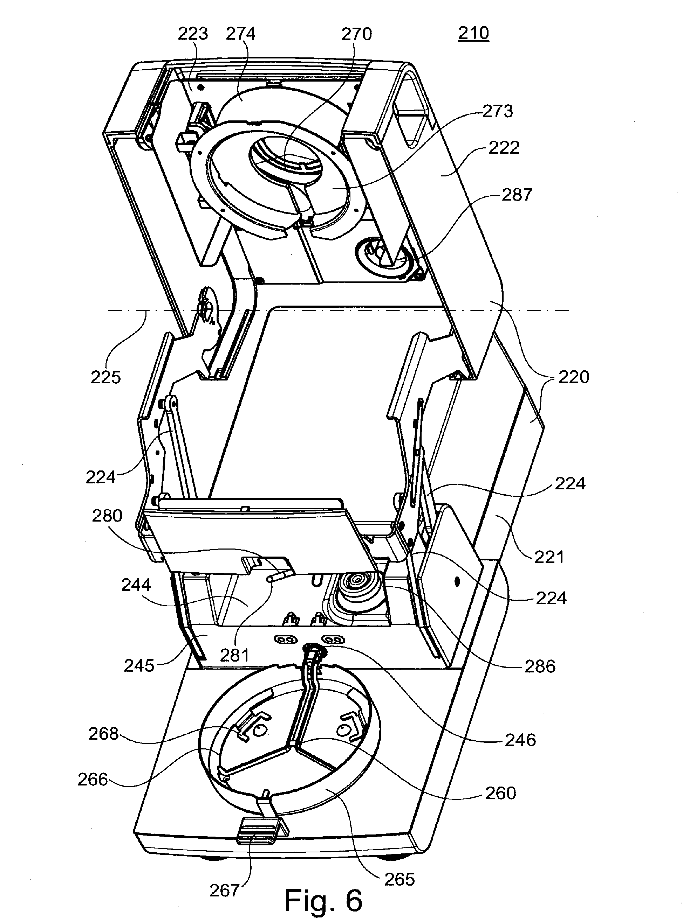

Um möglichst stabile Messergebnisse erhalten zu können, kann im Innern des Prüfraums ein Innenwindschutz angeordnet sein (siehe Figuren 6 - 8). Dieser Innenwindschutz ist um die Probenaufnahme 160 und das Mittel zur Erwärmung der Probe 170 angeordnet und bildet einen nahezu geschlossenen Raum. Der Innenwindschutz kann einen oberen Teil 174 und einen unteren Teil 165 aufweisen. Der obere Teil 174 ist am beweglichen Gehäuseteil 122 angeordnet. Durch den oberen Teil des Innenwindschutzes 174 wird ein zylinderförmiger Innenraum gebildet, der zur Probenaufnahme geöffnet ist. In diesem zylinderförmigen Innenraum ist das Mittel zur Erwärmung der Probe angeordnet. Der obere Innenwindschutz kann nur aus einer Zylinderfläche bestehen. Es ist jedoch vorteilhaft, wenn am oberen Ende eine in Messposition und Beschickungsposition horizontal ausgerichtete Fläche angeordnet ist. Diese Fläche ist bevorzugterweise oberhalb des Mittels zur Erwärmung der Probe 170 angeordnet. Die dem Mittel zur Erwärmung der Probe 170 zugewandte Seite, ist idealerweise hitzereflektierend. Dadurch wird ein Teil der erzeugten Wärme am Innenwindschutz reflektiert und wird zur Erwärmung der auf der Probenaufnahme 160 angeordneten Probe verwendet. Der untere Teil des Innenwindschutzes 165 ist am feststehenden Gehäuseteil 121 angeordnet. Durch den unteren Teil des Innenwindschutzes 165 wird ein zylinderförmiger Innenraum gebildet, der zum Mittel zur Erwärmung der Probe 170 hin offen ist. In diesem zylinderförmigen Innenraum ist die Probenaufnahme 160 angeordnet. Der Innenraum des oberen Innenwindschutzes 174 und der Innenraum des unteren Innenwindschutzes 165 bilden in Messposition einen Innenraum, in dem das Mittel zur Erwärmung der Probe 170 und die Probenaufnahme 160 angeordnet sind. Sowohl der obere als auch der untere Teil des Innenwindschutzes 165, 174 können aus einem Teil oder aus mehreren Teilen gefertigt sein.

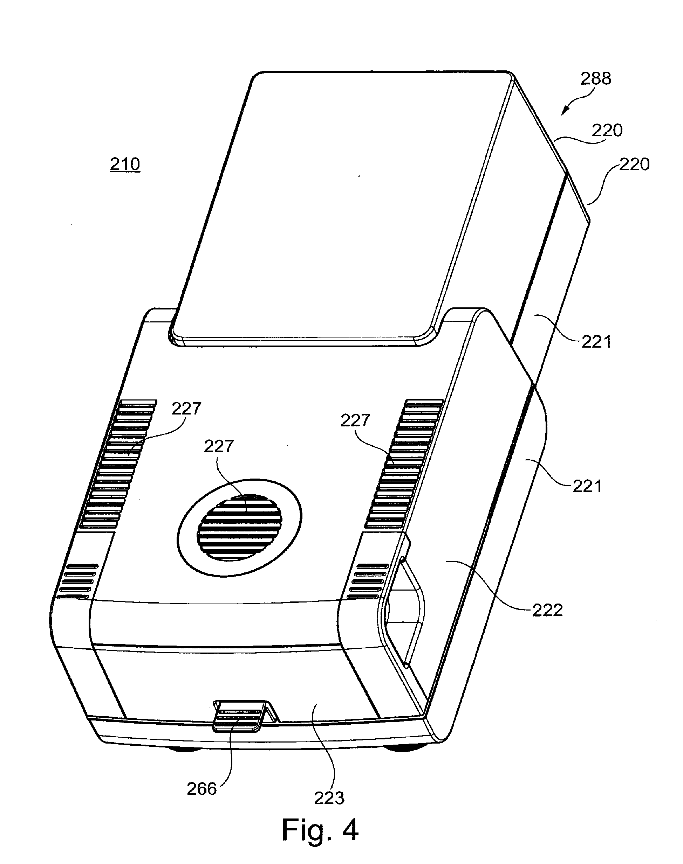

In den Figuren 4, 5, 6, 7 und 8 ist eine Ausführungsform des erfindungsgemässen Messgeräts 210 in verschiedenen Positionen dargestellt. Dieses Messgerät 210 weist sämtliche Bauteile auf, die bereits bei der Beschreibung der schematischen Ausführungsform aus Figur 1 und 2 beschrieben wurden.

In Figur 4 ist das erfindungsgemässe Messgerät 210 in Messposition dargestellt. Da das Gehäuse 220 in Messposition geschlossen ist, sind die meisten Bauteile nicht ersichtlich. Das Gehäuse 220 weist einen feststehenden Gehäuseteil 221 und einen beweglichen Gehäuseteil 222 auf. In Messposition wird vom feststehenden Gehäuseteil 221 und vom beweglichen Gehäuseteil 222 ein im Wesentlichen abgeschlossener Prüfraum gebildet. Der bewegliche Gehäuseteil 222 weist Abzugsöffnungen 227 auf, durch die Gase aus dem im Innern des Gehäuses 220 liegenden Prüfraum in die Umgebungsluft entweichen können. Vorteilhafterweise sind die Abzugsöffnungen 227 in Messposition auf der Oberseite des beweglichen Gehäuseteils 222 angeordnet. Besonders vorteilhaft ist eine Anordnung der Abzugsöffnungen 227 über dem, ebenfalls im Innern des Gehäuses 220 angeordneten, Mittel zur Erwärmung 170 der Probe.

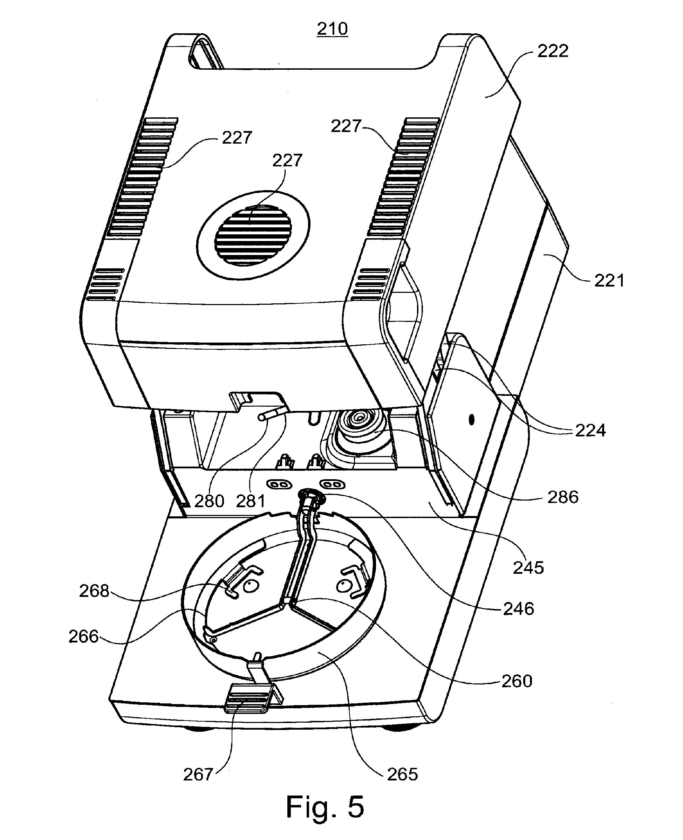

In Figur 5 ist das Messgerät 210 aus Figur 4 in Beschickungsposition dargestellt. Der bewegliche Gehäuseteil 222 wurde aus der Messposition durch eine translatorische Bewegung in die Beschickungsposition gebracht. Um diese translatorische Bewegung ausführen zu können, ist der bewegliche Gehäuseteil 222 durch eine Translationsführung 224 mit dem feststehenden Gehäuseteil 221 verbunden ist. Die Translationsführung 224 weist zwei im Wesentlichen parallel zueinander angeordnete Schenkel auf, durch deren Ausrichtung die Richtung der Translation des beweglichen Gehäuseteils 222 definiert ist.

Der feststehende Gehäuseteil 221 ist länglich ausgebildet. Die Wägevorrichtung ist vom feststehenden Gehäuseteil 221 weitgehend umschlossen. Einzig eine mit der Wägevorrichtung verbundene Probeaufnahme 260 ragt seitlich aus dem feststehenden Gehäuseteil 221 heraus. Auf dieser Probeaufnahme 260 lassen sich verschieden ausgestaltete Behältnisse wie Probeschalen, Tiegel und dergleichen mehr auflegen. Der feststehende Gehäuseteil 221 weist einen Bereich auf, der an der benutzerabgewandten Seite der Probenaufnahme 260 angeordnet ist. In diesem Bereich ist vorteilhafterweise die Wägevorrichtung angeordnet. In Beschickungsposition ist der bewegliche Gehäuseteil 222 oberhalb des feststehenden Gehäuseteils 221, idealerweise oberhalb des seitlich von der Probenaufnahme 260 angeordneten Bereichs, angeordnet.

Der bewegliche Temperatursensor 280 ist, auf einer beweglich gelagerten Lanze 281 angeordnet. Die Lanze 281 ist wie in der schematischen Darstellung der Figuren 3a und 3b beschrieben wurde, mittels eines Drehlagers am feststehenden Gehäuseteil befestigt. Die Achse des Drehlagers verläuft ebenfalls horizontal und die Lanze 281 ist auch mittels einer Federkraft in Messposition vorgespannt. In Messposition ist der Temperatursensor 280 zwischen dem Mittel zur Erwärmung der Probe 270 und der Probenaufnahme 260 angeordnet. In Beschickungsposition ist der Temperatursensor 280 und die Lanze 281 seitlich und oberhalb der Probenaufnahme 260 angeordnet. Auf diese Weise kann das Messgerät 210 mit einer Probe beschickt werden, ohne dass der Benutzer dabei durch den Temperatursensor 280 behindert wird.

Das Mittel zur Erwärmung der Probe 270 ist im beweglichen Gehäuseteil 222 angeordnet. Während der Messung wird das Mittel zur Erwärmung der Probe 270 heiss und erwärmt dadurch die unterhalb auf der Probenaufnahme 260 angeordnete Probe. Für die Erwärmung wird Elektrizität bzw. Strom benötigt. Dazu verfügt der feststehende Gehäuseteil 221 über einen Stromanschluss 288, der auf der Rückseite des Messgeräts 210 angeordnet ist. Der bewegliche Gehäuseteil 222 verfügt über keinen Stromanschluss. Der Strom muss deshalb vom feststehenden Gehäuseteil 221 zum beweglichen Gehäuseteil 222 transportiert werden. Dies geschieht Mittels eines elektrischen Kontaktmittels. Dieses elektrische Kontaktmittel weist einen ersten Teil 286 und einen zweiten Teil 287 auf. Der erste Teil 286 des elektrischen Kontaktmittels ist mit dem beweglichen Gehäuseteil 222 und der zweite Teil des elektrischen Kontaktmittels mit dem feststehenden Gehäuseteil 221 verbunden. Die beiden Teile des elektrischen Kontaktmittels 286, 287 sind dabei derart angeordnet, dass in Messposition ein elektrischer Kontakt vorhanden ist und das Mittel zur Erwärmung der Probe 270 mit Strom versorgt wird. In Beschickungsposition besteht kein Kontakt über das elektrische Kontaktmittel 286, 287. Der elektrische Kontakt wird automatisch durch die Bewegung des beweglichen Gehäuseteils 222 sichergestellt. Besonders vorteilhaft hat sich eine drehbare, konzentrische Steckverbindung, wie sie auch bei Wasserkochern verwendet wird, als elektrisches Kontaktmittel erwiesen. Die drehbare, konzentrische Steckverbindung ist besonders robust und stellt zuverlässig einen elektrischen Kontakt her. Es sind jedoch auch andere Ausführungsformen denkbar. Insbesondere Stecker-Buchsen-Verbindungen sind gut geeignet.

Durch diese Anordnung besteht in Messposition über den ersten und zweiten Teil des elektrischen Kontaktmittels 286, 287 eine elektrische Verbindung und in Beschickungsposition ist die elektrische Verbindung zwischen dem ersten und dem zweiten Teil des elektrischen Kontaktmittels 286, 287 unterbrochen. In der Beschickungsposition steht deshalb das Mittel zur Erwärmung nicht unter Strom und das Verletzungsrisiko ist reduziert. Der zweite Teil des elektrischen Kontaktmittels 286 wird in Figur 5 durch den beweglichen Gehäuseteil 222 verdeckt und ist deshalb nicht sichtbar.

Zur Reduktion von Luftwirbeln im Prüfraum kann im Innern des Prüfraums, um die Probenaufnahme 260, ein Innenwindschutz 265, 274 angeordnet sein. Dieser Innenwindschutz 265, 274 ist bevorzugterweise der äusseren Form der Probenschale und/oder der äusseren Form des Mittels zur Erwärmung der Probe 270 angepasst. Da üblicherweise runde Probenschalen verwendet werden, bietet sich die Verwendung eines Innenwindschutzes 265, 274 mit einer runden Aussenform an. Der Innenwindschutz kann einen oberen Teil 274 und einen unteren Teil 265 aufweisen. Der obere Teil 274 ist am beweglichen Gehäuseteil 222 angeordnet. Durch den oberen Teil des Innenwindschutzes 274 wird ein zylinderförmiger Innenraum umgrenzt, der zur Probenaufnahme geöffnet ist. In diesem zylinderförmigen Innenraum ist das Mittel zur Erwärmung der Probe 270 angeordnet. Der obere Innenwindschutz kann eine Zylinderfläche aufweisen. Es ist vorteilhaft, wenn die Zylinderfläche oberhalb der Probenaufnahme zumindest teilweise mittels Fläche, vorzugsweise einer Zylinderbasisfläche, begrenzt wird. Diese Fläche ist bevorzugterweise oberhalb des Mittel zur Erwärmung der Probe 270 angeordnet. Die dem Mittel zur Erwärmung der Probe 270 zugewandte Seite, ist idealerweise hitzereflektierend. Dadurch wird ein Teil der erzeugten Wärme am Innenwindschutz reflektiert und wird zur Erwärmung der auf der Probenaufnahme 160 angeordneten Probe verwendet. Die Fläche kann zudem Öffnungen aufweisen. Dadurch können Gase aus dem Prüfraum durch die beschriebenen Öffnungen und Abzugsöffnungen 227 im Gehäuse 220 in die Umgebungsluft entweichen. Es ist jedoch auch möglich, dass die Fläche keine Öffnungen aufweist.

Der untere Teil des Innenwindschutzes 265 ist am feststehenden Gehäuseteil 221 angeordnet. Durch den unteren Teil des Innenwindschutzes 265 wird ein zylinderförmiger Innenraum gebildet, der zum Mittel zur Erwärmung der Probe 270 offen ist. In diesem zylinderförmigen Innenraum ist die Probenaufnahme 260 angeordnet. Der Innenraum des oberen Innenwindschutzes 274 und der Innenraum des unteren Innenwindschutzes 265 bilden in Messposition einen Innenraum, in dem das Mittel zur Erwärmung der Probe 270 und die Probenaufnahme 260 angeordnet sind. Sowohl der obere als auch der untere Teil des Innenwindschutzes 265, 274 können aus einem Teil oder aus mehreren Teilen gefertigt sein.

Zum Einbringen einer Probeschale in den Prüfraum kann ein Probenschalenhalter 266 verwendet werden. Dieser Probenschalenhalter 266 weist einen Griff 267 und Auflageflächen 268 für die Probenschale auf. Während des Transports liegen die Ränder der Probenschale auf den Auflageflächen 268 auf. Während der Messung liegt die Probenschale nur auf der Probenaufnahme 260. Der Probenschalenhalter 266 berührt die Probenschale dabei nicht. Insbesondere wird das Gewicht des Probenschalenhalters 266 nicht von der Wägevorrichtung erfasst.

In Figur 6 ist das erfindungsgemässe Messgerät 210 aus Figur 4 bzw. Figur 5 in Wartungsposition dargestellt. Um in die Wartungsposition zu gelangen wurde ein Teil des beweglichen Gehäuseteils 222 um eine im Wesentlichen horizontal ausgerichtete Schwenkachse 225 von der Beschickungsposition in die Wartungsposition verschwenkt. Das Mittel zur Erwärmung der Probe 270 ist in dem schwenkbaren Teil des beweglichen Gehäuseteils 222 angeordnet und wird beim Einnehmen der Wartungsposition zusammen mit dem schwenkbaren Teil des beweglichen Gehäuseteils 222 verschwenkt. Dadurch sind die im beweglichen Gehäuseteil 222 angeordneten Teile für Wartungszwecke leicht zugänglich. Im oberen Gehäuseteil 222 ist das Mittel zur Erwärmung der Probe 270 angeordnet. Das Mittel zur Erwärmung der Probe 270 wird während des Messvorgangs durch ein Schutzglas 272 geschützt. Um das Mittel zur Erwärmung der Probe 270 ist der obere Teil des Innenwindschutzes 274 angeordnet.

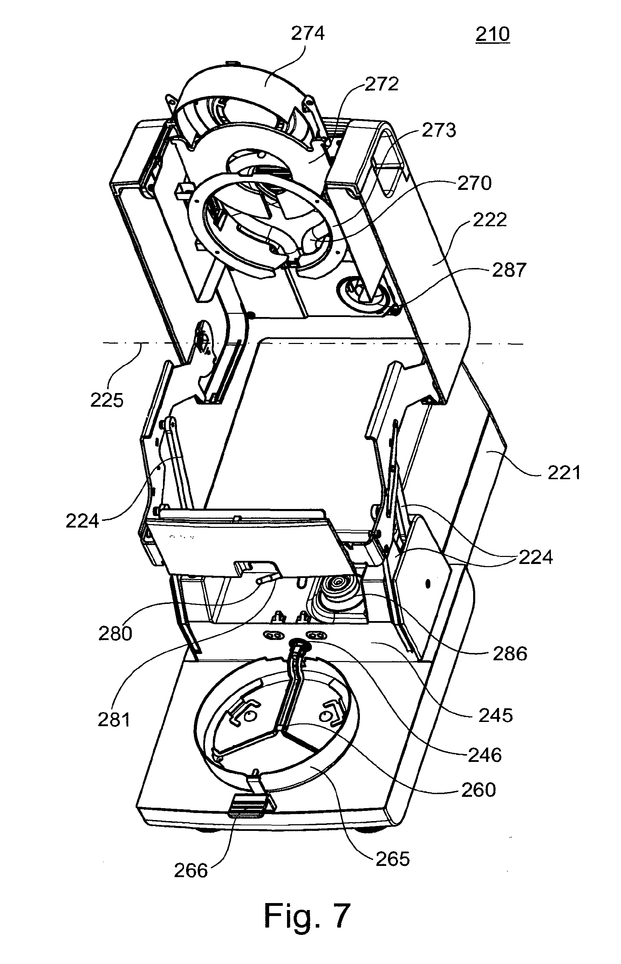

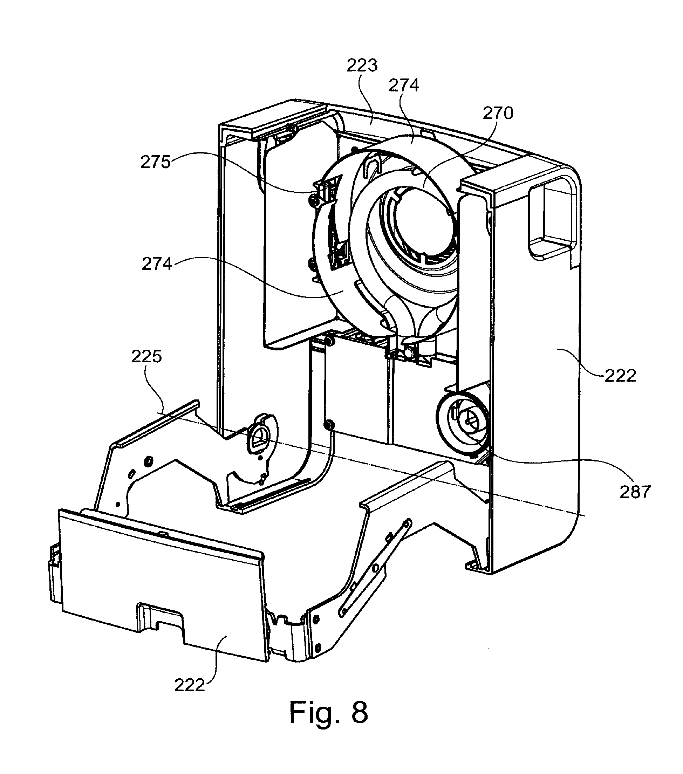

Um die Position und Ausgestaltung des Mittels zur Erwärmung der Probe 270, des Schutzglases 272 und des Innenwindschutzes 274 zu verdeutlichen ist in Figur 7 das Messgerät 220 mit teilweise entferntem oberen Teil des Innenwindschutzes 274 und in Figur 8 das bewegliche Gehäuseteil 222 ohne Schutzglas 272 dargestellt.

An der Zylinderbasisfläche des Innenwindschutzes 274 ist eine reflektierende Fläche angeordnet, die der Reflektion der Wärmestrahlung vom dem Mittels zur Erwärmung der Probe 270 zur Probenaufnahme 260 dient. Die Reflektion kann auch durch ein geeignetes, reflektierendes Materials der Zylinderbasisfläche oder einer reflektierenden Beschichtung der Zylinderbasisfläche erreicht werden. Eine im Wesentlichen kreisförmige Blende 273, dient der Konzentration der durch die vom Mittel zur Erwärmung der Probe 270 erzeugten Wärmestrahlen.

In Wartungsposition ist das Mittel zur Erwärmung der Probe 270 in vertikaler Richtung ausgerichtet. Zumindest ein Teil des oberen Innenwindschutzes 274 ist mittels einer Steckverbindung am beweglichen Gehäuseteil 222 befestigt, wobei die Steckverbindung in Wartungsposition im Wesentlichen vertikal ausgerichtet ist. Das Schutzglas 272 ist zwischen der Blende 273 und einem Teil des oberen Innenwindschutzes 274 eingeklemmt. Zum Entfernen des Schutzglases muss nur ein Teil des Innenwindschutzes 274 aus der Steckverbindung herausgezogen werden. Danach kann das Schutzglas einfach durch Herausziehen, ohne zu Hilfenahme von Werkzeugen entfernt werden. Das einfache Entfernen des Schutzglases 272 ist von besonderem Vorteil, da auf diese Weise das verschmutzungsanfällige Schutzglas 272 einfach entfernt und gereinigt werden kann.

Das Schutzglas 272 und/oder ein Teil des oberen Teils des Innenwindschutzes 274 kann mit Hilfe einer Führungsschiene 275 in einer kontrollierten Richtung aus dem beweglichen Gehäuseteil entfernt werden. Die Führungsschiene 275 ist in Wartungsposition im Wesentlichen vertikal ausgerichtet.

Das Entfernen des Schutzglases 272 wird zusätzlich durch eine Wartungsöffnung 223 vereinfacht. Die Wartungsöffnung 223 ist eine Öffnung im beweglichen Gehäuseteil 222, die nur in der Wartungsposition, jedoch nicht in der Messposition oder Beschickungsposition offen ist. Dadurch wird ein unbeabsichtigtes Berühren des Mittels zur Erwärmung der Probe verhindert. Das Verbrennungsrisiko kann reduziert werden. Die Wartungsöffnung wird mit Hilfe eines zweigeteilten beweglichen Gehäuseteils realisiert. Die beiden Teile des beweglichen Gehäuseteils sind dabei derart ausgestaltet, dass bei Einnahme der Wartungsposition ein Teil des beweglichen Gehäuseteils nicht verschwenkt wird. Dieser nicht-verschwenkte Teil gibt die Wartungsöffnung im verschwenkten Teil des beweglichen Gehäuseteils frei.

Die Breite der Wartungsöffnung 223 ist vorteilhafterweise gleich gross oder grösser als die Breite des Schutzglases 272. Auf diese Weise kann das Schutzglas einfach entfernt werden. Die Wartungsöffnung 223 ist orthogonal zur Steckrichtung des oberen Teils des Innenwindschutzes 274 bzw. in der Verlängerung der Führungsschiene 275 angeordnet. Durch diese Anordnung wird sicher gestellt, dass das Schutzglas 272 einfach aus der Wartungsöffnung 223 herausgezogen werden kann.

Der obere Teil des Innenwindschutzes 274 kann mehrteilig sein. Der der Wartungsöffnung 223 zugewandte Teil ist vorteilhafterweise werkzeuglos entfernbar. Dazu muss die Wartungsöffnung 223 breiter als der obere Teil des Innenwindschutzes 274 sein.

Das Mittel zur Erwärmung der Probe 270 kann auf verschiedene Weise am beweglichen Gehäuseteil 222 befestigt sein. Es ist beispielsweise möglich das Mittel zur Erwärmung 270 mittels einer Schraub- oder einer Steckverbindung am beweglichen Gehäuseteil 222 zu befestigen. Wird eine Steckverbindung verwendet, kann zu Wartungszwecken das Mittel zur Erwärmung 270 einfach herausgezogen werden. Idealerweise wäre diese Steckverbindung derart ausgestaltet, dass die Steckrichtung im Wesentlichen orthogonal zur Wartungsöffnung 223 ausgerichtet ist.

Das Mittel zur Erwärmung der Probe 270, die Blende 273, das Schutzglas 272 und der obere Teil des Innenwindschutzes 274 weissen Öffnungen auf, durch die aus einer Probe entweichenden Dämpfe und/oder flüchtigen Substanzen über diese Öffnungen und durch Abzugsöffnungen 227 in die Umgebungsluft abgeführt werden können. Die Öffnungen sind deshalb so angeordnet, dass ein direkter Abzug von aus der Probe entweichenden Gasen sicher gestellt ist. Vorteilhafterweise kann durch diese Öffnungen auf die auf der Probenaufnahme 260 angeordnete Probe geschaut werden, wodurch eine visuelle Kontrolle des Messvorgangs ermöglicht wird.

Anstelle des Innenwindschutzes 274 und der Blende 273 können andere geeignete Halterungen zur Positionierung des Schutzglases 272 verwendet werden.

Da das Schutzglas 272 einfach entfernbar ist, kann es durch den Benutzer oder Servicetechniker einfacher und schneller gereinigt werden. Idealerweise ist das Schutzglas 272 derart beschaffen, dass es in einer herkömmlichen Spülmaschine gereinigt werden kann, ohne dadurch beschädigt zu werden.

Die vorgestellten Ausführungsformen zeigen teilweise schematisch dargestellte Messgeräte zur gravimetrischen Feuchtigkeitsbestimmung mit unterschiedlichen Eigenschaften und Merkmalen. Die verschiedenen Eigenschaften und Merkmale wurden zur besseren Übersicht in verschiedenen Ausführungsbeispielen dargestellt, wobei es auch möglich ist, einzelne, mehrere oder alle aufgezeigten Merkmale und Eigenschaften in einem Messgerät zu realisieren.

### Bezugszeichenliste

- 210, 110, 10: Messgerät zur gravimetrischen Feuchtebestimmung
- 220, 120, 20: Gehäuse
- 221, 121, 21: Feststehender Gehäuseteil
- 222, 122, 22: Beweglicher Gehäuseteil
- 223: Wartungsöffnung
- 224, 24: Translationsführung
- 225: Schwenkachse
- 227, 27: Abzugsöffnungen
- 130, 30: Prüfraum
- 35: Steuer-/Regelvorrichtung
- 40: Wägevorrichtung
- 41: Feststehender Bereich der Wägezelle
- 42: Lastaufnahmebereich der Wägezelle
- 43: Wägezelle
- 245, 45: Trennwand
- 246, 46: Durchführung
- 47: Verbindungsglied
- 51: Übertragungsmittel zwischen der Steuer- und Regelvorrichtung und dem Temperatursensor
- 52: Übertragungsmittel zwischen dem Elektronikmodul und der Wägevorrichtung
- 53: Übertragungsmittel zwischen der Steuer- und Regelvorrichtung und dem Mittel zur Erwärmung der Probe
- 260, 160, 60: Probeaufnahme
- 61: Probeschale
- 62: Probe
- 265, 165: Unterer Teil des Innenwindschutzes
- 266: Probenschalenhalter
- 267: Griff des Probenschalenhalters
- 268: Auflagefläche der Probenschale während des Transports
- 270, 170, 70: Mittel zur Erwärmung der Probe, Strahlungsquelle
- 271: Strahlungsquelle
- 272: Schutzglas
- 273: Blende
- 274, 174: Oberer Teil des Innenwindschutzes
- 275: Führungsschiene
- 280, 180, 80: Temperatursensor
- 281, 181, 81: Lanze
- 282, 182, 82: Drehlagers
- 183, 83: Achse des Drehlagers
- 84: Federelement
- 286, 86: Erster Teil des elektrischen Kontaktmittels
- 287, 87: Zweiter Teil des elektrischen Kontaktmittels
- 288, 88: Netzanschluss, Stromanschluss
- 90: Elektronikmodul

## Patentansprüche

1. Messgerät (210) zur gravimetrischen Feuchtigkeitsbestimmung mit einem Gehäuse (220) und einer im Gehäuse (220) angeordneten Wägevorrichtung, wobei die Wägevorrichtung eine Lastaufnahme (260), auf die eine Probe auflegbar ist, aufweist und das Gehäuse (220) einen feststehenden Gehäuseteil (221) und einen beweglichen Gehäuseteil (222) aufweist und der bewegliche Gehäuseteil (222) eine Messposition und eine Wartungsposition einnehmen kann, wobei der feststehende Gehäuseteil (221) und der bewegliche Gehäuseteil (222) in Messposition einen im Wesentlichen abgeschlossenen Prüfraum um die Lastaufnahme (260) bildet und im Prüfraum ein Mittel zur Erwärmung (270) einer auf der Lastaufnahme (260) auflegbaren Probe angeordnet ist und in der Wartungsposition der feststehende Gehäuseteil (221) und der bewegliche Gehäuseteil (222) derart voneinander beabstandet sind, dass das Mittel zur Erwärmung (270) für Wartungszwecke zugänglich ist und das Mittel zur Erwärmung (270) mittels eines Schutzglases (272) geschützt ist, welches in Messposition zwischen dem Mittel zur Erwärmung der Probe (170) und der Lastaufnahme (260) angeordnet ist, **dadurch gekennzeichnet, dass** das Schutzglas (272) am beweglichen Gehäuseteil (222) angeordnet ist und in Wartungsposition werkzeuglos entfernbar ist und das Messgerät (210) eine Beschickungsposition einnehmen kann, wobei in Beschickungsposition der feststehende Gehäuseteil (221) und der bewegliche Gehäuseteil (222) derart voneinander beabstandet sind, dass eine Probe auf die Lastaufnahme (260) aufbringbar ist und mittels eines Verschiebungsmittels (224) der bewegliche Gehäuseteil (221) von der Messposition in die Beschickungsposition verschiebbar ist und das Schutzglas (272) zwischen einer oberen Halterung und einer unteren Halterung positionierbar ist und zumindest eine der Halterungen werkzeuglos entfernbar ist.

2. Messgerät (210) zur gravimetrischen Feuchtigkeitsbestimmung nach Anspruch 1, **dadurch gekennzeichnet, dass** das Mittel zur Erwärmung (270) und das Schutzglas (272) in der Wartungsposition im Wesentlichen vertikal ausgerichtet sind.

3. Messgerät (210) zur gravimetrischen Feuchtigkeitsbestimmung nach einem der vorhergehenden Ansprüche, **dadurch gekennzeichnet, dass** das Schutzglas (272) mittels einer Steckverbindung mit dem beweglichen Gehäuseteil (222) verbunden ist.

4. Messgerät (210) zur gravimetrischen Feuchtigkeitsbestimmung nach einem der vorhergehenden Ansprüche, **dadurch gekennzeichnet, dass** Schutzglas (272) mittels werkzeuglos entfernbarer Bauteile am beweglichen Gehäuseteil (222) fixiert ist.

5. Messgerät (210) zur gravimetrischen Feuchtigkeitsbestimmung nach einem der vorangehenden Ansprüche, **dadurch gekennzeichnet, dass** die obere Halterung, die untere Halterung und/oder das Schutzglas (272) mittels mindestens einer Führungsschiene (275) in einer vordefinierten Richtung aus dem beweglichen Gehäuseteil (222) entfernbar sind.

6. Messgerät (210) zur gravimetrischen Feuchtigkeitsbestimmung nach einem der vorangehenden Ansprüche , **dadurch gekennzeichnet, dass** die Führungsschiene (275) in Wartungsposition im Wesentlichen vertikal ausgerichtet ist.

7. Messgerät (210) zur gravimetrischen Feuchtigkeitsbestimmung nach einem der vorangehenden Ansprüche, **dadurch gekennzeichnet, dass** das bewegliche Gehäuseteil (222) in Verlängerung zur Führungsschiene (275) eine Wartungsöffnung (223) zum Entfernen des Schutzglases (272) aufweist.

8. Messgerät (210) nach Anspruch 7, **dadurch gekennzeichnet, dass** die Wartungsöffnung (223) in Wartungsposition geöffnet und in Messposition und Beschickungsposition geschlossen ist.

9. Messgerät (210) zur gravimetrischen Feuchtigkeitsbestimmung nach einem der vorangehenden Ansprüche, **dadurch gekennzeichnet, dass** um das Mittel zur Erwärmung der Probe (270) und das Schutzglas (272) ein Innenwindschutz (274) angeordnet ist und ein Teil des Innenwindschutzes (274) als obere Halterung zur Positionierung des Schutzglases (272) dient.

10. Messgerät (210) zur gravimetrischen Feuchtigkeitsbestimmung nach einem der vorangehenden Ansprüche, **dadurch gekennzeichnet, dass** mittels einer Blende (273) die Richtung der Wärmestrahlung steuerbar ist, und die Blende (273) als untere Halterung des Schutzglases (272) dient.

11. Messgerät (210) zur gravimetrischen Feuchtigkeitsbestimmung nach Anspruch 10, **dadurch gekennzeichnet, dass** die Blende (273) am beweglichen Gehäuseteil (222) angeordnet ist.

12. Messgerät (210) zur gravimetrischen Feuchtigkeitsbestimmung nach Anspruch 10 oder 11, **dadurch gekennzeichnet,** die Blende (273) werkzeuglos entfernbar ist.

13. Messgerät (210) zur gravimetrischen Feuchtigkeitsbestimmung nach einem der vorangehenden Ansprüche, **dadurch gekennzeichnet, dass** sowohl in Messposition, Beschickungsposition und Wartungsposition der bewegliche Gehäuseteil (221) oberhalb des feststehenden (222) Gehäuseteils angeordnet ist.

14. Messgerät (210) nach einem der vorangehenden Ansprüche, **dadurch gekennzeichnet, dass** ein elektrisches Kontaktmittel (285) einen ersten Teil (286) und einen zweiten Teil (287) aufweist und der erste Teil (286) des elektrischen Kontaktmittels (285) mit dem feststehenden Gehäuseteil (221) und der zweite Teil (287) des elektrischen Kontaktmittels (285) mit dem beweglichen Gehäuseteil (222) fest verbunden ist und in Messposition über den ersten und zweiten Teil (286, 287) des elektrischen Kontaktmittels eine elektrische Verbindung besteht und in Beschickungsposition und Wartungsposition die elektrische Verbindung zwischen ersten und zweiten Teil (286, 287) des elektrischen Kontaktmittels unterbrochen ist.

## Claims

1. Measuring instrument (210) for the gravimetric determination of moisture content, with a housing (220) and a weighing device arranged inside the housing (220), wherein the weighing device comprises a load receiver (260) onto which a sample can be placed, wherein the housing (220) comprises a stationary housing part (221) and a movable housing part (222), wherein the movable housing part (222) can occupy a measuring position and a servicing position, wherein in said measuring position, the stationary housing part (221) and the movable housing part (222) form an essentially enclosed testing compartment surrounding the load receiver (260), wherein a sample-heating means (270) is arranged in the testing compartment to perform the function of heating a sample that is placed on the load receiver (260), wherein in said servicing position the stationary housing part (221) and the movable housing part (222) are spaced apart from each other in such a way that the sample-heating means (270) is accessible for servicing, and wherein the sample-heating means (270) is protected by means of a glass shield (272) which in the measuring position is located between the sample-heating means (270) and the load receiver (260), **characterized in that** the glass shield (272) is arranged on the movable housing part (222) and, when in the servicing position, can be taken out without using tools and the measuring instrument (210) can be brought into a loading position, wherein in said loading position the stationary housing part (221) and the movable housing part (222) are spaced apart from each other in such a way that a sample can be put on the load receiver (260) and that the movable housing part (222) can be brought from the measuring position into the loading position by means of a position-changing device (224)and the glass shield (272) can be seated between an upper holder and a lower holder, and that at least one of the holders is removable without the use of tools.

2. Measuring instrument (210) for the gravimetric determination of moisture content according to claim 1, **characterized in that** in the servicing position the sample-heating means (270) and the glass shield (272) are oriented essentially in a vertical direction.

3. Measuring instrument (210) for the gravimetric determination of moisture content according to one of the preceding claims, **characterized in that** the glass shield (272) is connected to the movable housing part (222) by means of a plug connection.

4. Measuring instrument (210) for the gravimetric determination of moisture content according to one of the preceding claims, **characterized in that** the glass shield (272) is attached to the movable housing part (222) by means of components that can be removed without the use of tools.

5. Measuring instrument (210) for the gravimetric determination of moisture content according to one of the preceding claims, **characterized in that** the upper holder, the lower holder and/or the glass shield (272) can be removed from the movable housing part (222) in a predefined direction by means of at least one guide track (275).

6. Measuring instrument (210) for the gravimetric determination of moisture content according to one of the preceding claims, **characterized in that** in the servicing position, the guide track (275) is oriented in an essentially vertical direction.

7. Measuring instrument (210) for the gravimetric determination of moisture content according to one of the preceding claims, **characterized in that** the movable housing part (222) has a service opening (223) for the removal of the glass shield (272), wherein said service opening is arranged in the extension of the path of the guide track (275).

8. Measuring instrument (210) according to claim 7, **characterized in that** the service opening (223) is open in the servicing position of the measuring instrument (210) and closed in the measuring position as well as in the loading position.

9. Measuring instrument (210) for the gravimetric determination of moisture content according to one of the preceding claims, **characterized in that** an interior draft shield (274) is arranged around the sample-heating means (270) and the glass shield (272), and that a part of said interior draft shield (274) serves as the upper holder for keeping the glass shield (272) in place.

10. Measuring instrument (210) for the gravimetric determination of moisture content according to one of the preceding claims, **characterized in that** the direction of the heat radiation can be controlled by means of a light-screening barrier (273) and that said light-screening barrier (273) serves as the lower holder of the glass shield (272).

11. Measuring instrument (210) for the gravimetric determination of moisture content according to claim 10, **characterized in that** the light-screening barrier (273) is arranged on the movable housing part (222).

12. Measuring instrument (210) for the gravimetric determination of moisture content according to claim 10 or 11, **characterized in that** the light-screening barrier (273) is removable without the use of tools.

13. Measuring instrument (210) for the gravimetric determination of moisture content according to one of the preceding claims, **characterized in that** in the measurement position as well as in the loading position and in the servicing position the movable housing part (222) is located above the stationary housing part (221).

14. Measuring instrument (210) for the gravimetric determination of moisture content according to one of the preceding claims, **characterized in that** the measuring instrument (210) comprises an electrical contact means (285) with a first part (286) and a second part (287), that the first part (286) of the electrical contact means (285) is solidly connected to the stationary housing part (221), that the second part (287) of the electrical contact means (285) is solidly connected to the movable housing part (222) and that, in the measuring position, an electrical connection exists by way of the first and the second part (286, 287) of the electrical contact means, while said electrical connection between the first and the second part (286, 287) of the electrical contact means is interrupted in the loading position and in the servicing position.

## Revendications

1. Instrument de mesure (210) pour la détermination gravimétrique de l'humidité, avec un boîtier (220) et un dispositif de pesage agencé dans le boîtier (220), dans lequel le dispositif de pesage comporte un récepteur de charge (260) sur lequel peut être placé un échantillon, et le boîtier (220) comporte une partie de boîtier fixe (221) et une partie de boîtier mobile (222), et la partie de boîtier mobile (222) peut prendre une position de mesure et une position de maintenance, dans lequel la partie de boîtier fixe (221) et la partie de boîtier mobile (222) forment une chambre d'essai quasiment fermée autour du récepteur de charge (260) dans la position de mesure, et un moyen de chauffage (270) d'un échantillon destiné à être placé sur le récepteur de charge (260) est agencé dans la chambre d'essai, et la partie de boîtier fixe (221) et la partie de boîtier mobile (222) sont espacés l'un de l'autre dans la position de maintenance, de manière à ce que le moyen de chauffage (270) soit accessible à des fins de maintenance, et le moyen de chauffage (270) est protégé à l'aide d'un verre de protection (272) agencé entre le moyen de chauffage de l'échantillon (170) et le récepteur de charge (260) dans la position de mesure, **caractérisé en ce que** le verre de protection (272) est monté sur la partie de boîtier mobile (222) et peut être retiré sans outil dans la position de maintenance, et **en ce que** l'instrument de mesure (210) peut prendre une position de chargement, la position de chargement de la partie de boîtier fixe (221) et celle de la partie de boîtier mobile (222) étant espacées l'une de l'autre de manière à pouvoir placer un échantillon sur le récepteur de charge (260) et à pouvoir déplacer la partie de boîtier mobile (222) de la position de mesure vers la position de chargement à l'aide d'un moyen de déplacement (224), et à pouvoir positionner le verre de protection (272) entre un support supérieur et un support inférieur et retirer au moins l'un des supports sans outil.

2. Instrument de mesure (210) pour la détermination gravimétrique de l'humidité selon la revendication 1, **caractérisé en ce que** le moyen de chauffage (270) et le verre de protection (272) sont orientés quasiment verticalement dans la position de maintenance.

3. Instrument de mesure (210) pour la détermination gravimétrique de l'humidité selon l'une des revendications précédentes, **caractérisé en ce que** le verre de protection (272) est relié à la partie de boîtier mobile (222) à l'aide d'un assemblage par emboîtement.

4. Instrument de mesure (210) pour la détermination gravimétrique de l'humidité selon l'une des revendications précédentes, **caractérisé en ce que** le verre de protection (272) est fixé à la partie de boîtier mobile (222) à l'aide de composants amovibles sans outil.

5. Instrument de mesure (210) pour la détermination gravimétrique de l'humidité selon l'une des revendications précédentes, **caractérisé en ce que** le support supérieur, le support inférieur et/ou le verre de protection (272) peuvent être retirés de la partie de boîtier mobile (222) à l'aide d'au moins un rail de guidage (275) dans une direction prédéfinie.

6. Instrument de mesure (210) pour la détermination gravimétrique de l'humidité selon l'une des revendications précédentes, **caractérisé en ce que** le rail de guidage (275) est orienté quasiment verticalement dans la position de maintenance.

7. Instrument de mesure (210) pour la détermination gravimétrique de l'humidité selon l'une des revendications précédentes, **caractérisé en ce que** la partie de boîtier mobile (222) comporte une ouverture de maintenance (223) dans le prolongement du rail de guidage (275), pour le retrait du verre de protection (272).

8. Instrument de mesure (210) selon la revendication 7, **caractérisé en ce que** l'ouverture de maintenance (223) est ouvert dans la position de maintenance et fermé dans la position de mesure et la position de chargement.

9. Instrument de mesure (210) pour le détermination gravimétrique de l'humidité selon l'une des revendications précédentes, **caractérisé en ce qu'**un pare-vent intérieur (274) est agencé autour du moyen de chauffage de l'échantillon (270) et du verre de protection (272), et une partie du pare-vent intérieur (274) sert de support supérieur pour le positionnement du verre de protection (272).

10. Instrument de mesure (210) pour la détermination gravimétrique de l'humidité selon l'une des revendications précédentes, **caractérisé en ce que** la direction de la diffusion de chaleur peut être commandée à l'aide d'un cache (273), et le cache (273) sert de support inférieur du verre de protection (272).

11. Instrument de mesure (210) pour la détermination gravimétrique de l'humidité selon la revendication 10, **caractérisé en ce que** le cache (273) est agencé sur la partie de boîtier mobile (222).

12. Instrument de mesure (210) pour la détermination gravimétrique de l'humidité selon la revendication 10 ou 11, **caractérisé en ce que** le cache (273) peut être retiré sans outil.

13. Instrument de mesure (210) pour la détermination gravimétrique de l'humidité selon l'une des revendications précédentes, **caractérisé en ce qu'**aussi bien dans la position de mesure, la position de chargement et la position de maintenance, la partie de boîtier mobile (222) est agencée au-dessus de la partie de boîtier fixe (221).

14. Instrument de mesure (210) selon l'une des revendications précédentes, **caractérisé en ce qu'**un moyen de contact électrique (285) comporte une première partie (286) et une deuxième partie (287), et la première partie (286) du moyen de contact électrique (285) est reliée fixement à la partie de boîtier fixe (221) et la deuxième partie (287) du moyen de contact électrique (285) est reliée fixement à la partie de boîtier mobile (222), et une liaison électrique pouvant être établie par le biais des première et deuxième parties (286, 287) du moyen de contact électrique dans la position de mesure, la liaison électrique étant interrompue entre les première et deuxième parties (286, 287) du moyen de contact électrique dans la position de chargement et la position de maintenance.
